# FASCICULE DE BREVET EUROPEEN

(11) **EP 0 785 085 B1**
(45) Date de publication et mention de la délivrance du brevet: **19.04.2000**
(21) Numéro de dépôt: 97400079.6
(22) Date de dépôt: 16.01.1997
(51) Int. Cl.: B41M 1/34, C03C 17/00, B60R 13/10

(54) **Procédé d'impression sur un vitrage et vitrage obtenu**
Glasdruckverfahren und Fenster, das bei diesem Druckverfahren gedruckt wird
Process for printing on glass and window obtained thereby

(30) Priorité: 19.01.1996 FR 9600579
(43) Date de publication de la demande: 23.07.1997
(73) Titulaire: SAINT-GOBAIN VITRAGE, 92400 Courbevoie (FR)
(72) Inventeur: Beyrle, André, 60170 Tracy Le Val (FR)
(74) Mandataire: Le Cam, Stéphane Georges Elie

(56) Documents cités:
- DE-A- 3 122 133
- DE-C- 16 491
- GB-A- 2 068 834

## Description

L'invention concerne un procédé d'impression sur un vitrage. L'invention concerne plus particulièrement l'impression ou l'inscription d'un ou plusieurs termes qui peuvent représenter une marque ou bien des indications techniques. Il peut également s'agir de l'impression de tout type de signes distinctifs tels que marques figuratives, logos, dessins... Pour simplifier la compréhension de l'invention, celle-ci sera décrite en référence à un vitrage automobile devant comporter une telle inscription. Toutefois, il est bien évident que l'invention ne se limite pas à une telle application, mais vise d'autres applications dont certaines seront énumérées ultérieurement.

Des procédés d'impression d'une inscription ou d'un dessin ont déjà été décrits dans l'art antérieur. Il est notamment connu du Brevet Français FR 2 331 528 de réaliser un vitrage muni d'une inscription et utilisé pour clore un local présentant une luminosité inférieure à celle de l'environnement, ladite inscription étant constituée par une couche transparente semi-réfléchissante. Selon cette technique, il est possible d'imprimer une inscription sans trop perturber la visibilité au travers du vitrage. Par contre, il apparaît que cette inscription ne sera visible de l'extérieur que dans des conditions précises de luminosité. GB-A-2 068 834 décrit un procédé d'application d'une couche métallique sur un support vitreux ou céramique en utilisant un masque.

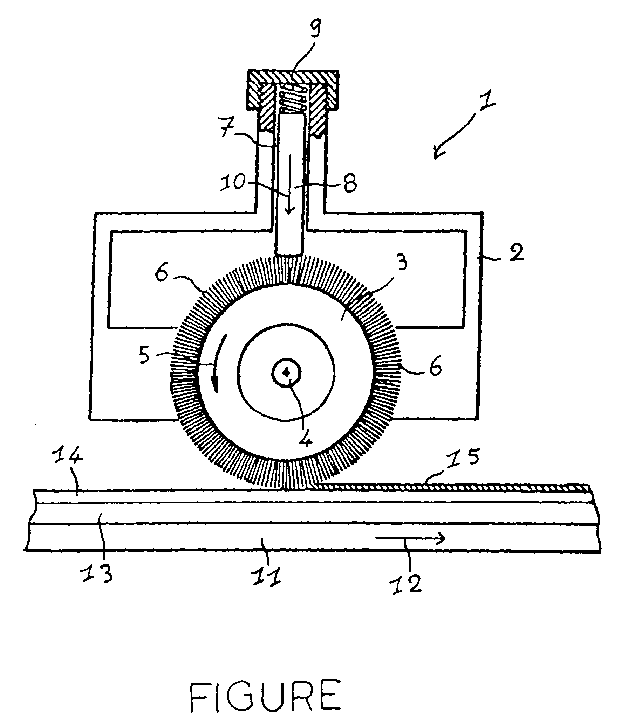

D'autres techniques connues consistent à réaliser l'inscription ou le dessin par dépôt d'un émail, par exemple par la méthode de l'écran de soie. Il est encore possible, par des techniques semblables, de faire des attaques du verre à partir de pâte à base d'acide fluorhydrique. D'autres méthodes encore permettent de réaliser l'impression avec des encres déposées le plus souvent par jet. Ces différentes méthodes présentent le plus souvent un caractère relativement onéreux, soit parce qu'elles sont réalisées en plusieurs étapes et qu'elles nécessitent le plus souvent une étape de cuisson, soit parce que les techniques à mettre en oeuvre sont coûteuses.

Par ailleurs, la demande actuelle des constructeurs automobiles concerne des vitrages possédant une zone émaillée en périphérie. Il apparaît très délicat de réaliser une autre impression sur le vitrage, celle-ci se faisant alors dans la zone de vision.

L'invention a ainsi pour but un procédé d'impression sur un vitrage, le motif imprimé ne nuisant pas à la visibilité au travers de celui-ci, notamment lorsque le vitrage possède une couche opaque sur au moins une partie de sa surface.

Un autre but de l'invention est un procédé qui ne nécessite pas d'étapes délicates à mettre en oeuvre et peu onéreux.

Ces buts sont atteints, selon l'invention, par un procédé d'impression sur un vitrage tel qu'un vitrage comportant une couche opaque par exemple un émail, sur au moins une partie de la surface d'une de ses faces selon lequel on crée une fenêtre de forme voulue dans la couche opaque et selon lequel on obture ladite fenêtre en déposant une couche mince métallique. Par fenêtre, on entend une zone du vitrage non recouverte d'émail ; une telle fenêtre est, par exemple, obtenue par la présence d'un masque lors de la réalisation de la couche opaque sur le vitrage. La forme de cette fenêtre peut donc être déterminée par celle du masque utilisé et correspondra avantageusement au signe que l'on désire imprimer sur le vitrage. Cette zone ou fenêtre est ensuite recouverte d'une couche mince métallique. La vision depuis l'autre face du vitrage permet de visualiser le signe inscrit qui présente un effet miroir. Cet effet miroir rend le signe très visible et procure un effet esthétique original. De plus, l'inscription se faisant sur une zone déjà occupée par la couche opaque, celle-ci ne nuit pas à la visibilité au travers du vitrage puisque ladite zone n'est initialement pas prévue pour procurer une telle visibilité.

Selon un mode préféré de réalisation, la couche mince métallique est déposée par frottements successifs d'un organe métallique de transfert sur une pièce solide formée du métal à déposer, puis sur la zone du vitrage apparente dans la fenêtre. Il apparaît qu'un tel procédé de dépôt permet d'obtenir une couche mince métallique présentant une adhérence satisfaisante. Le métal choisi est, par exemple, l'étain, le plomb, l'aluminium, le silicium ou des alliages de ces métaux, ou encore le laiton...

De préférence encore, l'organe métallique de transfert est une brosse métallique animée d'un mouvement de rotation. Selon cette réalisation, lors du mouvement de la brosse, celle-ci vient au contact de la pièce solide, par exemple un barreau, pour lui arracher des particules par frottement qui, dans un second temps, sont redéposées sur le verre, également par frottement de ladite brosse.

L'invention prévoit avantageusement un mouvement relatif entre la fenêtre, et donc le vitrage, et l'organe métallique de transfert. De préférence, on utilise une brosse fixe, sous laquelle défile le vitrage comportant la fenêtre. Une telle réalisation est simple de mise en oeuvre, dès lors que l'on se place sur la chaîne de fabrication du vitrage et plus particulièrement, en sortie d'arche de recuisson dans laquelle s'effectue, par exemple, la cuisson de l'émail.

De préférence encore, l'invention prévoit que le frottement entre l'organe métallique de transfert et la pièce solide est effectué avec une pression suffisante pour arracher des particules de métal à la pièce solide.

De préférence également, le frottement entre l'organe de transfert et le vitrage est effectué avec une pression suffisante pour déposer les particules de métal portées par l'organe de transfert, sans risque de dégrader le vitrage et/ou la couche opaque déjà déposée.

Un tel procédé d'impression permet donc de réaliser un signe visible par transparence au travers du vitrage, celui-ci présentant un effet miroir. Dans le cas, notamment, d'un vitrage automobile, un tel procédé permet, par exemple, d'inscrire la marque ou le modèle d'un véhicule sur la périphérie du vitrage qui comporte un émail noir. Cet émail est présent, d'une part pour l'aspect esthétique qu'il procure, et d'autre part pour la protection des joints de collage du vitrage contre les ultra-violets. Après montage du vitrage sur une automobile, l'émail et la couche mince métallique sont sur la face du vitrage dirigée vers l'intérieur de l'habitacle.

Notamment pour ne pas nuire à l'esthétique intérieure du véhicule, l'invention prévoit avantageusement de recouvrir la couche mince métallique par tout moyen rendant ladite couche invisible. Un tel moyen est, par exemple, le dépôt d'un primaire qui présente une couleur noire ; ce primaire est déposé sur la couche mince métallique, par exemple par enduction, et masque donc celle-ci à la vue des occupants du véhicule, tout en se confondant avec la couche opaque. Dans certains cas, il peut être inutile de redéposer une couche telle qu'un primaire, si la couche mince métallique peut être dissimulée par l'habillage intérieur du véhicule automobile.

Le fait de masquer la couche mince métallique autorise, par ailleurs, à ne pas se limiter à la zone du vitrage qui apparaît dans la fenêtre, pour déposer ladite couche. En effet, il est possible de déborder sur la couche opaque, ce qui simplifie énormément le procédé de dépôt qui ne nécessite ainsi aucune précaution particulière.

L'invention vise également un vitrage obtenu selon le procédé précédemment décrit. Selon l'invention, le vitrage comporte une couche opaque telle qu'un émail, par exemple un émail noir, sur au moins une partie de la surface d'une de ses faces, ledit émail présentant une fenêtre comblée par une couche mince métallique.

Selon une variante de l'invention, la couche mince métallique est invisible du côté de la face sur laquelle elle est déposée et présente un effet miroir en transparence du côté de l'autre face du vitrage.

Selon une réalisation avantageuse, la fenêtre présente la forme d'un signe distinctif.

D'autres détails et caractéristiques avantageux de l'invention ressortiront ci-après de la description d'un exemple de réalisation de l'invention, en référence à la figure qui représente un exemple d'un dispositif pour la mise en oeuvre de l'invention.

Sur la figure, est représenté un dispositif 1 selon l'invention. Ce dispositif 1 se compose d'un élément support 2 associé à une brosse métallique 3. Cette brosse 3 est montée sur un axe 4, lui-même associé à des moyens non représentés, tels qu'un moteur, permettant d'entraîner la brosse 3 en rotation, par exemple dans le sens indiqué par la flèche 5. La brosse 3 comporte des poils métalliques 6 dont le choix de la longueur et de la dureté peut être défini par l'homme du métier en fonction du métal à déposer qui a été choisi. Au niveau de la partie supérieure de l'élément support 2 est prévu un emplacement 7 destiné à recevoir un barreau 8 constitué du métal à déposer. Des moyens 9, tels qu'un ressort, sont prévus dans l'emplacement 7 de façon à exercer une force selon la direction indiquée par la flèche 10. Cette force permet de maintenir le barreau 8 au contact des poils 6 de la brosse métallique 3 selon la pression désirée. Cette pression peut, bien entendu, être définie en fonction du métal constituant le barreau 8 et de la nature des poils 6.

Ce dispositif 1 permet donc, lors du mouvement de rotation de la brosse 3, un arrachement de particules métalliques du barreau 8 par frottement des poils 6 sur celui-ci. Et il apparaît que les particules, prélevées par la brosse 3, restent solidaires des poils 6.

Par ailleurs, le dispositif 1 est prévu de sorte que la brosse soit dans une position supérieure à un dispositif 11. Ce dispositif 11, représenté très schématiquement sur la figure, est prévu pour amener un vitrage 13 selon la direction indiquée par la flèche 12. Le vitrage 13 peut ainsi défiler sous la brosse 3. Le vitrage 13 représenté est un vitrage simple composé d'une seule feuille de verre ; toutefois, ce vitrage 13 pourrait être un élément d'un vitrage feuilleté ou tout autre type de vitrage. Ce vitrage 13 comporte, à sa périphérie, un émail noir 14 qui a été obtenu auparavant par des techniques connues de l'homme du métier, telle que la réalisation par sérigraphie.

Le vitrage 13 comporte donc, sur sa face tournée vers la brosse métallique 3, la couche d'émail noir 14. Lors de la réalisation de la couche d'émail noir obtenue, par exemple, par cuisson d'une suspension dans un liant organique d'un métal et d'une fritte à bas point de fusion, il a été prévue une fenêtre, non représentée sur la figure, c'est-à-dire une zone du vitrage non recouverte d'émail au milieu de la couche d'émail périphérique. Cette fenêtre peut être obtenue, par exemple, avec un masque lors du dépôt, de la suspension dans le liant organique, à l'aide d'un écran de soie. La fenêtre, et donc le masque utilisé, possède avantageusement la forme de l'inscription ou du dessin que l'on désire réaliser. La fenêtre obtenue défile ainsi sous la brosse 3 et est recouverte d'une couche mince métallique. Le but de l'invention est de recouvrir le vitrage, et plus exactement la fenêtre créée dans la couche d'émail, d'une couche mince métallique. Il s'avère que l'épaisseur de la couche métallique obtenue selon le procédé de l'invention, est très faible. L'invention peut prévoir des passages successifs du vitrage sous plusieurs dispositifs 1.

Ces passages successifs permettent la formation d'une couche métallique plus importante dont l'aspect en transparence depuis l'autre face est assurément celui d'un miroir.

Il est particulièrement intéressant de noter que l'épaisseur plus importante est obtenue par dépôts successifs de métal sous une même brosse ou sous plusieurs brosses, mais que ces dépôts ne sont finalement pas individualisables.

En ce qui concerne la brosse, celle-ci présente comme caractéristique essentielle d'être métallique ou conducteur électrique et suffisamment dure. Il s'agit, par exemple, d'une brosse 3 en acier dont les poils ou fils ont un diamètre compris entre 0,1 et 0,5 mm. Avant utilisation, la brosse 3 est avantageusement totalement dégraissée de façon à éviter tout glissement sur le barreau 8 qui conduirait à un mauvais prélèvement de particules métalliques.

Lors du défilement du vitrage 13 sous le dispositif 1, la brosse 3 vient donc frotter sur la surface du vitrage 13, et plus particulièrement sur la fenêtre. Il se forme ainsi une couche mince métallique 15 qui recouvre la fenêtre créant ainsi un motif présentant un effet miroir en transparence à travers le vitrage. D'autres moyens, non représentés sur la figure, sont alors utilisés pour assurer une pression satisfaisante de la brosse 3 sur le vitrage 13, de façon à redéposer les particules métalliques portées par les poils 6 en évitant, bien entendu, tout risque de dégradation de l'émail 14 et/ou du vitrage 13.

Les vitrages, ainsi obtenus selon l'invention, présentent donc une inscription qui a l'effet d'un miroir en transparence au travers du verre. Cette inscription est donc parfaitement visible, d'autant plus qu'elle se trouve au coeur d'une zone opaque.

Un autre avantage de l'inscription est que celle-ci, notamment dans le cas d'un vitrage automobile, se trouve au sein de l'habitacle et ne peut donc pas être altérée par les conditions extérieures.

L'invention n'est, bien entendu, pas limitée à des applications automobiles mais concerne également des vitrages bâtiments devant comporter des inscriptions, par exemple, publicitaires. Elle concerne également tout type de plaques de verre telles que des tableaux de commandes d'appareils électroménagers ou des plaques vitrocéramiques qui doivent comporter des inscriptions telles que chiffres, marques...

## Revendications

1. Procédé d'impression sur un vitrage tel qu'un vitrage comportant une couche opaque sur au moins une partie de la surface d'une de ses faces, **caractérisé en ce qu**'on crée une fenêtre de forme voulue dans la couche opaque **et en ce qu**'on obture cette fenêtre en déposant une couche mince métallique.

2. Procédé selon la revendication 1, **caractérisé en ce que** la couche opaque est un émail, par exemple un émail noir.

3. Procédé selon la revendication 1 ou 2, **caractérisé en ce que** la couche mince métallique est déposée par frottements successifs d'un organe métallique de transfert sur une pièce solide formée du métal à déposer, puis sur la zone du vitrage apparente dans la fenêtre.

4. Procédé selon la revendication 3, **caractérisé en ce que** l'organe métallique de transfert est une brosse métallique animée d'un mouvement de rotation.

5. Procédé selon l'une des revendicaitons 3 ou 4, **caractérisé en que qu**'on crée un mouvement relatif entre le vitrage comportant la fenêtre et l'organe métallique de transfert.

6. Procédé selon l'une des revendications 3 à 5, **caractérisé en ce que** le frottement entre l'organe de transfert et la pièce solide est effectué avec une pression suffisante pour arracher des particules de métal à la pièce solide.

7. Procédé selon l'une des revendication 3 à 6, **caractérisé en ce que** le frottement entre l'organe de transfert et la zone du vitrage apparente dans la fenêtre est effectué avec une pression suffisante pour déposer les particules de métal portées par l'organe de transfert.

8. Procédé selon l'une des revendications précédentes, **caractérisé en ce qu**'après dépôt de la couche mince métallique, on recouvre celle-ci par tout moyen rendant ladite couche invisible.

9. Vitrage comportant une couche opaque telle qu'un émail, sur au moins une partie de la surface d'une de ses faces, **caractérisé en ce que** la couche opaque présente une fenêtre comblée par une couche mince métallique.

10. Vitrage selon la revendication 9, **caractérisé en ce que** la couche mince métallique est invisible du côté de la face sur laquelle elle est déposée et présente un effet miroir en transparence du côté de l'autre face du vitrage.

11. Vitrage selon la revendication 10, **caractérisé en ce que** la fenêtre a la forme d'un signe distinctif.

## Patentansprüche

1. Verfahren zum Bedrucken einer Verglasung wie einer Verglasung, welche auf mindestens einem Teil der Oberfläche einer Seite eine opake Schicht umfaßt, **dadurch gekennzeichnet, daß** in der opaken Schicht ein Fenster mit gewünschter Form erzeugt wird, und daß dieses Fenster durch Aufbringen einer dünnen Metallschicht verschlossen wird.

2. Verfahren nach Anspruch 1, **dadurch gekennzeichnet, daß** die opake Schicht ein Email, beispielsweise ein schwarzes Email, ist.

3. Verfahren nach Anspruch 1 oder 2, **dadurch gekennzeichnet, daß** die dünne Metallschicht durch aufeinander folgende Reibungsvorgänge einer Metallübertragungseinrichtung auf einem festen Teil, das aus dem aufzubringenden Metall gebildet ist, und anschließend auf dem Bereich der Verglasung, der sich im Fenster befindet, aufgebracht wird.

4. Verfahren nach Anspruch 3, **dadurch gekennzeichnet, daß** die Metallübertragungseinrichtung eine Metallbürste ist, die mit einer Drehbewegung angetrieben wird.

5. Verfahren nach Anspruch 3 oder 4, **dadurch gekennzeichnet, daß** zwischen der das Fenster enthaltenden Verglasung und der Metallübertragungseinrichtung eine Relativbewegung erzeugt wird.

6. Verfahren nach einem der Ansprüche 3 bis 5, **dadurch gekennzeichnet, daß** der Reibungsvorgang zwischen Übertragungseinrichtung und festem Teil mit einem Druck durchgeführt wird, der ausreicht, um Metallteilchen aus dem festen Teil herauszulösen.

7. Verfahren nach einem der Ansprüche 3 bis 6, **dadurch gekennzeichnet, daß** der Reibungsvorgang zwischen der Übertragungseinrichtung und dem Bereich der Verglasung, der sich im Fenster befindet, mit einem Druck durchgeführt wird, der ausreicht, die von der Übertragungseinrichtung transportierten Metallteilchen abzuscheiden.

8. Verfahren nach einem der vorhergehenden Ansprüche, **dadurch gekennzeichnet, daß** nach dem Aufbringen der dünnen Metallschicht diese mit einem geeigneten Mittel bedeckt wird, das diese Schicht unsichtbar werden läßt.

9. Verglasung, welche auf mindestens einem Teil der Oberfläche einer Seite eine opake Schicht wie ein Email umfaßt, **dadurch gekennzeichnet, daß** die opake Schicht ein Fenster aufweist, das mit einer dünnen Metallschicht ausgefüllt ist.

10. Verglasung nach Anspruch 9, **dadurch gekennzeichnet, daß** die dünne Metallschicht auf der Seite der Fläche, auf welcher sie aufgebracht worden ist, nicht sichtbar ist und in Durchsicht auf der Seite der anderen Fläche der Verglasung einen Spiegeleffekt aufweist.

11. Verglasung nach Anspruch 10, **dadurch gekennzeichnet, daß** das Fenster die Form eines bestimmten Zeichens hat.

## Claims

1. Process for printing on a glazing such as a glazing having an opaque coating on at least one portion of the surface of one of its faces, characterized in that a window having a desired shape is created in the opaque coating and in that said window is sealed by depositing a metal film.

2. Process according to claim 1, characterized in that the opaque coating is of enamel, e.g. a black enamel.

3. Process according to claim 1 or 2, characterized in that the metal film is deposited by successively rubbing a metal transfer member on a solid part formed from the metal to be deposited and then on the area of the glazing visible in the window.

4. Process according to claim 3, characterized in that the metal transfer member is a metal brush performing a rotary movement.

5. Process according to one of the claims 3 or 4, characterized in that a relative movement is created between the glazing having the window and the metal transfer member.

6. Process according to one of the claims 3 to 5, characterized in that the rubbing between the transfer member and the solid part takes place with an adequate pressure to tear metal particles away from the solid part.

7. Process according to one of the claims 3 to 6, characterized in that the rubbing between the transfer member and the area of the glazing visible in the window takes place with a pressure adequate for depositing the metal particles carried by the transfer member.

8. Process according to one of the preceding claims, characterized in that following the deposition of the metal film, the latter is covered by any means rendering said film invisible.

9. Glazing incorporating an opaque coating such as an enamel, on at least one portion of the surface of one of its faces, characterized in that the opaque coating has a window filled by a metal film.

10. Glazing according to claim 9, characterized in that the metal film is invisible from the side of the face on which it is deposited and has a mirror effect in transparency from the side of the other face of the glazing.

11. Glazing according to claim 10, characterized in that the window is in the form of a distinctive sign.
